# EUROPÄISCHE PATENTSCHRIFT

(11) **EP 2 363 737 B1**
(45) Veröffentlichungstag und Bekanntmachung des Hinweises auf die Patenterteilung: **04.04.2012**
(21) Anmeldenummer: 11000552.7
(22) Anmeldetag: 25.01.2011
(51) Int. Cl.: G02B 5/22, G02F 1/01

(54) **Verfahren und Vorrichtung zum Abbilden einer Umgebung auf eine Detektoreneinrichtung**
Device and method for depicting an environment on a detector device
Procédé et dispositif de représentation d'un environnement sur un dispositif de détecteurs

(30) Priorität: 03.02.2010 DE 102010006661
(43) Veröffentlichungstag der Anmeldung: 07.09.2011
(73) Patentinhaber: Diehl BGT Defence GmbH & Co.KG, 88662 Überlingen (DE)
(72) Erfinder: Rungenhagen, Matthias, 88662 Überlingen (DE); Künzner, Nicolai, Dr., 88677 Markdorf (DE); Tholl, Hans Dieter, Dr., 88690 Uhldingen-Mühlhofen (DE)
(74) Vertreter: Diehl Patentabteilung

(56) Entgegenhaltungen:
- EP-A2- 0 803 760
- DE-A1- 4 305 807
- US-A- 3 020 406
- US-A- 5 351 151
- US-A- 5 448 382
- US-A- 5 708 522
- US-A1- 2007 179 239
- US-B1- 6 652 778

## Beschreibung

Die Erfindung betrifft ein Verfahren zum Abbilden einer Umgebung auf eine Detektoreinrichtung, bei dem mit einem optischen System ein Abbildungsstrahlengang erzeugt wird und mit einer im Abbildungsstrahlengang angeordneten Blende ein Teilbereich des Bilds der Umgebung auf der Detektoreinrichtung abgeschattet wird.

Kameras zur Überwachung der Umgebung sind üblicherweise mit elektrooptischen Sensoren, z. B. Matrixdetektoren, ausgestattet, auf denen ein Bild der Umgebung abgebildet und nach elektronischer Auswertung gegebenenfalls auf einem Bildschirm angezeigt wird. Liegt im Bild eine punktförmige oder im Vergleich zu den Dimensionen des Gesichtsfelds des elektrooptischen Sensors eine gering ausgedehnte, jedoch starke Strahlungsquelle, wie beispielsweise die Sonne, so führt diese zu einer Blendung im wiedergegebenen Bild, die die Bildqualität in einem Bereich um die abgebildete Strahlungsquelle stört. Im schlimmsten Fall kommt es sogar zu einer Schädigung des Detektors. Überdies wird bei Vorhandensein einer starken Strahlungsquelle im Gesichtsfeld des Sensors der Bereich der erfassbaren Szenendynamik stark eingeschränkt.

Zur Vermeidung derartiger effekte wird die auf den Detektor einfallende elektromagnetische Strahlung durch Veränderung der Ausrichtung des Detektors, z. B. durch eine Veränderung der Ausrichtung des abbildenden optischen Systems, verhindert. Eine andere Möglichkeit liegt im Schließen eines Verschlusses, wodurch der Durchgang von Strahlung auf den Detektor verhindert und somit der Detektor vollständig geschützt wird.

Die US 2007/179239 A1 beschäftigt sich mit dynamischen optischen Komponenten auf Basis von thermochromem Material, die beispielsweise als Filter oder Maske verwendet werden können. Unter anderem wird ein optisches Element umfassend ein Substrat mit einer thermochromen Schicht auf der Vorderseite und einer dielektrischen Schicht auf der Rückseite offenbart, bei welcher über rückseitige Bestrahlung durch eine hinter dem Element angeordnete optische Quelle dessen dielektrische Schicht erwärmt und darüber die Transmissivität der thermochromen Schicht geändert wird.

Aus der DE 43 05 807 A1 ist eine Kamera mit einer steuerbaren Matrixblende bekannt. Die Blende besteht aus Pixeln, die in ihrer Transparenz in Abhängigkeit von Helligkeit ansteuerbar sind, um den Kontrasteindruck eines Bildes zu erhöhen.

Die US 3 020 406 A offenbart die Verwendung eines dünnen Germanium-Plättchens als "Sonnenblende". Dieses ist zwischen einem IR-Detektor und einem optischen System angeordnet. Befindet sich im Gesichtsfeld des optischen Systems die Sonne, so wird es zu einer Erwärmung des Germanium-Plättchens an der Stelle kommen, an der die Sonne abgebildet wird. Diese Stelle wird opak werden, wohingegen der restliche Bereich des Plättchens weiterhin transparent für IR-Strahlung verbleibt.

Es ist eine Aufgabe der Erfindung, ein Verfahren und eine Vorrichtung zum Abbilden einer Umgebung auf eine Detektoreinrichtung anzugeben, mit denen die Umgebung auch bei Vorhandensein einer starken Strahlungsquelle zuverlässig überwacht werden kann.

Die auf das Verfahren gerichtete Aufgabe wird durch ein Verfahren der eingangs genannten Art gelöst, bei dem erfindungsgemäß
a) die Blende in einem Teilbereich bestrahlt wird und die Transmission der Blende im Teilbereich im gesamten Frequenzbereich, in dem die Detektoreinrichtung empfindlich ist, durch die Bestrahlung herabgesetzt wird und der bestrahlte Teilbereich der Blende den ausgewählten Teilbereich des Bilds abschattet und
b) die Bestrahlung durch einen gerichteten Strahl eines Strahlers erfolgt, wobei der Strahl seitlich in den Abbildungsstrahlengang eingeführt wird und der Strahl an einem Element des optischen Systems reflektiert wird, bevor er die Blende trifft.
Durch eine Ausrichtung der Bestrahlung auf den Teilbereich der Blende, der nur einen Teil der Blende umfasst, so dass dem übrigen Bereich der Blende zumindest im Wesentlichen seine normale Transmission erhalten bleibt, kann der abzuschattende Teilbereich des Bilds ausgewählt werden. Die durch den bestrahlten Teilbereich der Blende auf der Detektoreinrichtung erzeugte Abschattung kann im Gesichtsfeld, also im Bild der Umgebung auf der Detektoreinrichtung, so platziert werden, dass eine starke Strahlungsquelle abgeschattet ist, wohingegen die außerhalb der Abschattung liegenden Bereiche der Abbildung weiterhin ausgewertet und die entsprechenden Umgebungsteile überwacht werden können.

Zum Erzeugen der Abschattung wird die Blende bestrahlt. Die hierfür verwendete Strahlung, im Folgenden Abschattungsstrahlung genannt, kann hinter einer Aperturblende des optischen Systems, zweckmäßigerweise hinter dem gesamten optischen System, seitlich in den Strahlengang eingeführt und auf die Blende gerichtet werden. Sie ist zweckmäßigerweise Strahlung, die mit Hilfe einer Optik auf die Blende gerichtet ist, und deren Frequenz außerhalb des Empfindlichkeitsbereichs der Detektoreinrichtung liegt. Sie wird vorteilhafterweise mit einem Laser erzeugt, wobei alternativ auch eine oder mehrere LED als Strahlungsquelle möglich sind.

Die Lage des bestrahlten Teilbereichs auf der Blende, im Folgenden auch nur Bereich genannt, kann durch ein Steuermittel bestimmt werden. Dieses kann einen Aktuator ansteuern zum Ausrichten der Abschattungsstrahlung auf den ausgewählten Bereich der Blende. Das Steuermittel ist durch ein oder mehrere entsprechende Steuerprogramme für diese Zwecke vorbereitet, dessen bzw. deren Ablauf - beispielsweise in Verbindung mit geeigneten Eingangssignalen, wie Sensorsignalen - eine solche Steuerung bewirkt. Durch das oder die entsprechenden Steuerprogramme wird das Steuermittel zur Durchführung der angegebenen Abläufe befähigt, sodass die entsprechende Steuerung bei Programmablauf durchgeführt wird. Das Steuermittel dient zum Steuern eines, mehrerer oder aller Verfahrensschritte, die im Folgenden, auch in der Figurenbeschreibung, beschrieben sind.

Die Detektoreinrichtung umfasst zweckmäßigerweise zumindest einen Detektor, insbesondere einen Matrixdetektor, der - je nach Anwendung - gleichzeitig oder ausschließlich in den Spektralbereichen Ultraviolett, sichtbarem Licht, Nahinfrarot, Kurzwelleninfrarot, Mittelwelleninfrarot und Langwelleninfrarot arbeiten kann. Das Bild deckt zweckmäßigerweise einen Winkelbereich von zumindest 10° x 10° der Umgebung aus Sicht des optischen Systems ab, sodass dieser Ausschnitt der Umgebung überwacht werden kann. Das optische System kann eine abbildende Optik aus refraktiven, diffraktiven oder reflektiven Elementen oder einer beliebigen Kombination derselben sein.

Vorteilhafterweise enthält die Blende thermochromes Material. Solches Material führt bei einer bestimmten Temperatur einen Phasenübergang durch, z. B. einen Phasenübergang Halbleiter - Metall, und ändert dabei ihre optischen Eigenschaften grundlegend, so dass ein Aufheizen des Materials die Transparenz bis auf Null herabsetzen kann. Geeignete Materialien sind einige Oxide von Vanadium VₓOy, z. B. VO₂, das bei 68°C einen Halbleiter-Metall-Übergang vollzieht, V₂O₃, dessen Übergangstemperatur bei -123°C liegt, oder nichtstöchiometrische Mischungen. Das entsprechende thermochrome Material ist vorteilhafterweise als Beschichtung auf einem Blendenträgermaterial aufgebracht, zweckmäßigerweise mit einer Dicke von 0,1 µm bis 1 µm. Weiter ist es zweckmäßig, wenn die thermochrome Beschichtung auf einem guten Wärmeträger aufgebracht ist, um eingetragene Wärme schnell wieder abführen zu können, so dass die Schicht wieder transparent ist. Besonders geeignet ist eine industriell hergestellte Diamantschicht, insbesondere mit einer Dicke zwischen 10 µm und 50 µm. Einfachere und im Infraroten transparente Materialien sind Silicium, Germanium, ZnSe oder ZnS.

In einer vorteilhaften Ausführungsform der Erfindung erfolgt die Bestrahlung durch einen gerichteten Strahl, und die Form des bestrahlten Bereichs wird durch eine Veränderung der Ausrichtung des Strahls auf die Blende bewirkt. So kann der Strahl über einen beweglichen Spiegel und/oder mehrere gegeneinander bewegliche Mikrolinsen ausgerichtet werden. Die Größe des bestrahlten Bereichs kann einfach eingestellt und der ganze Bereich gleichmäßig ausgeleuchtet werden, wenn die Größe durch eine Veränderung der Divergenz des Strahls bewirkt wird.

Weiter wird vorgeschlagen, dass der Energieeintrag aus der von außen bestrahlenden Strahlungsquelle in Abhängigkeit von der beleuchteten Fläche gesteuert wird. Auf diese Weise kann eine große Abschattungsfläche schnell erwärmt und eine kleine Fläche vor Überhitzung geschützt werden.

Eine einfache Einkopplung der Abschattungsstrahlung in den Strahlengang wird gemäß der Erfindung erreicht, indem die Bestrahlung durch einen gerichteten Strahl erfolgt, der an einem Element des optischen Systems reflektiert wird bevor er die Blende trifft. Eine effiziente Nutzung der Abschattungsstrahlung zum Erwärmen der Blende wird erreicht, wenn die Abschattungsstrahlung nach Durchtreten der Blende reflektiert wird und erneut auf die Blende trifft.

Das erfindungsgemäße Verfahren ist vorteilhafterweise so weitergebildet, dass eine Blendung in einem Bild der Umgebung erkannt und der Bildbereich anhand der Lage - und insbesondere zusätzlich anhand der Ausdehnung - der Blendung im Bild ausgewählt wird. Das Erkennen kann hierbei durch eine Intensitätsmessung der einfallenden Strahlung erfolgen, wobei bei Überschreiten der Intensität über einen Grenzwert diese Intensität als Blendung klassifiziert wird. Alternativ oder zusätzlich besteht die Möglichkeit, den Bildbereich anhand der Art eines Blendobjekts, seiner Dynamik und/oder seiner Strahlstärke auszuwählen.

Ist die Lage eines Blendobjekts im Raum im Vorhinein bekannt, so kann auf bildverarbeitende Methoden bei Auswahl des Bildbereichs verzichtet werden. So kann beispielsweise die Auswahl des Bildbereichs aus der bekannten Lage des Blendobjekts im Raum und der Ausrichtung des optischen Systems im Raum ermittelt werden. Der bestrahlte Bereich kann gegebenenfalls mit der Wanderung des Blendobjekts im Gesichtsfeld mitbewegt werden, sodass das Blendobjekt stets vollständig abgeschattet ist.

Alternativ oder zusätzlich ist es vorteilhaft, wenn die Lage des bestrahlten Bereichs anhand einer Eigenschaft des Blendobjekts bzw. einer Blendung durch das Blendobjekt geregelt wird. So kann es vorkommen, dass beispielsweise die Sonne zwar durch eine mitbewegte Blende abgeschattet wird, durch starke Eigenbewegung des optischen Systems die Abschattung jedoch unvollständig ist und ein Rand der Sonne hin und wieder aus der Abschattung hervortritt. Wird die so entstehende Blendung als solche und in ihrer Position im Gesichtsfeld erkannt, so kann durch die Regelung die Position des bestrahlten Bereichs nachgeführt und das Blendobjekt in sehr kurzer Zeit wieder vollständig oder im Wesentlichen vollständig abgeschattet werden.

Um ein abgeschattetes Blendobjekt genau überwachen zu können, ist es vorteilhaft, wenn es durch die Abschattung hindurch sichtbar bleibt. Hierzu ist die Abschattung nicht vollständig, so dass eine Resttransparenz verbleibt. Um eine Schädigung der Detektoreinrichtung zu vermeiden, wird diese Resttransparenz vorteilhafterweise so gesteuert, dass die Blende in einem ausgewählten Bereich so bestrahlt wird, dass sie in den Frequenzen, in denen die Detektoreinrichtung empfindlich ist, undurchlässig ist, und dann die Abschattungsstrahlung reduziert wird, bis ein ausgewählter Teiltransmissionsgrad erreicht ist. Die Auswahl des Transmissionsgrads kann durch eine Bildauswertung geschehen, indem die Abschattungsstrahlung so lange reduziert und damit der Transmissionsgrad erhöht wird, bis das Blendobjekt in einem vorgegebenen Maß sichtbar ist.

Um eine schnelle Transparenzreduzierung der Blende im ausgewählten Bereich zu erhalten, ist es vorteilhaft, wenn die Blende zumindest teilweise bereits vor der Bestrahlung auf einer Temperatur gehalten wird, die in der Nähe der Übergangstemperatur liegt, in der die Blende ihre Transparenz ändert. Geeignet sind Abstände von 1°C bis 20°C zur Übergangstemperatur. Hierzu kann die Blende von einem die Blende kontaktierenden Heizmittel von ihrem Randbereich her aufgeheizt werden bevor sie von außen bereichsweise bestrahlt wird. Die Aufheizung erfolgt zweckmäßigerweise auf eine vorbestimmte Temperatur der Blende.

Je näher die Aufheiztemperatur an der Übergangstemperatur der Blende liegt, desto mehr führt ein Wärmeeintrag durch Abschattungsstrahlung in den ausgewählten Bereich dazu, dass die eingetragene Wärme auch Randbereiche außerhalb des ausgewählten Bereichs erwärmt und diese somit ihre Transparenz verringern. Auf diese Weise kann eine graduelle Transparenzerhöhung um den ausgewählten Bereich herum erreicht werden. Die Größe des Bereichs außerhalb des ausgewählten Bereichs, der durch die eingestrahlte Energie seine Transparenz verringert, im Folgenden Randabschattungsbereich genannt, kann durch die Vorheiztemperatur eingestellt werden.

Dies ist vorteilhaft, um Blendobjekte mit verschiedener Bewegungsdynamik ohne weitreichende Bildstörung effektiv ausblenden zu können. Hat ein Blendobjekt eine geringe Bewegungsdynamik, bewegt es sich also langsam über das Gesichtsfeld, reicht ein geringer Randabschattungsbereich oder kein Randabschattungsbereich aus, da der bestrahlte Bereich entsprechend der langsamen Bewegung dem Blendobjekt im Gesichtsfeld nachgeführt werden kann. Bei einer hohen Dynamik kann es sein, dass der bestrahlte Bereich nicht schnell genug der Bewegung des Blendobjekts folgt und das Blendobjekt, bzw. dessen Bild, den Abschattungsbereich verlässt. Bei fehlendem Randabschattungsbereich trifft die volle Intensität des aus der Abschattung heraustretenden Teils des Blendobjekts den Detektor unvermindert. Bei einem Randabschattungsbereich tritt zwar ein Teil des Blendobjekts aus dem Kernschatten der Blende heraus, verbleibt allerdings im Teilschatten des graduell nach außen transparenter werdenden Randabschattungsbereichs. Je nach Größe des Randabschattungsbereichs wird der heraustretende Teil noch stark gedämpft. Der austretende Teil des Blendobjekts kann erkannt und der bestrahlte Bereich entsprechend nachgeführt werden, sodass das Blendobjekt wieder im Kernschatten zu liegen kommt und vollkommen abgeschirmt wird. Vorteilhafterweise wird der Randabschattungsbereich in Abhängigkeit einer Eigenschaft eines Blendobjekts im Bild eingestellt.

Anstelle oder zusätzlich zu einer Vorausberechnung der Position eines Blendobjekts und der entsprechenden Positionierung der Blende kann mit Hilfe eines zweiten Detektors die Position eines Blendobjekts z.B. mittels bildverarbeitender Methoden erkannt und der bestrahlte Bereich so positioniert werden, dass Strahlung vom Blendobjekt den ersten Detektor nicht erreicht. Hierzu umfasst die Detektoreinrichtung zweckmäßigerweise einen ersten und einen zweiten Detektor und der Strahlengang zum ersten Detektor wird unterbrochen, insbesondere vollständig unterbrochen, sodass keine Strahlung von außerhalb der Vorrichtung mehr auf diesen ersten Detektor auftritt, der Bildbereich wird mit Hilfe des zweiten Detektors ausgewählt, beispielsweise indem das Bild vom zweiten Detektor mit Hilfe bildverarbeitender Methoden ausgewertet und das Blendobjekt und dessen Position im Bild erkannt wird, dann die Position des zu bestrahlenden Bereichs festgelegt und die Blende bestrahlt und der Strahlengang zum ersten Detektor wird wieder geöffnet wird. Die Position des Blendobjekts kann mit Hilfe des vom zweiten Detektors gewonnen Bilds verfolgt und der bestrahlte Bereich vor dem ersten Detektor entsprechend positioniert werden, sodass das Blendobjekt stets aus dem Bild des ersten Detektors ausgeblendet ist.

Die Erfindung geht außerdem von einer Vorrichtung zum Abbilden einer Umgebung auf eine Detektoreinrichtung aus mit einem optischen System zum Erzeugen eines Abbildungsstrahlengangs und einer im Abbildungsstrahlengang angeordneten Blende zum Abschatten eines Teilbereichs des Bilds der Umgebung auf der Detektoreinrichtung.

Zur Lösung der auf die Vorrichtung gerichteten Aufgabe wird vorgeschlagen, dass die Vorrichtung einen Strahler zum gerichteten Bestrahlen der Blende umfasst, dessen Strahl seitlich in den Abbildungsstrahlengang einführbar ist und an einem Element des optischen Systems reflektiert wird, bevor er die Blende trifft, und weiterhin ein Steuerungsmittel umfasst, das dazu vorbereitet ist, den Strahler so zu steuern, dass die Blende in einem Teilbereich bestrahlt wird, wobei die Transmission der Blende im Teilbereich im gesamten Frequenzbereich, in dem die Detektoreinrichtung empfindlich ist, durch die Bestrahlung im Vergleich zum unbestrahlten Bereich herabgesetzt wird. Ein abzuschattender Bildbereich kann schnell abgeschattet werden, so dass einer Bildstörung oder Schädigung der Detektoreinrichtung vorgebeugt werden kann. Vorteilhafterweise durchkreuzt die Blende den gesamten Strahlengang, so dass sie bei vollständiger Bestrahlung die Detektoreinrichtung vollständig abschattet.

Vorteilhafterweise ist die Blende unmittelbar an einem Detektor der Detektoreinrichtung oder einem Fenster zum Detektor, beispielsweise ein Dewarfenster, angeordnet. Der Abstand zwischen Blende und Detektor bzw. Detektorfenster zum Detektor beträgt zweckmäßigerweise nicht mehr als 2 mm, wobei der Abstand fest oder einstellbar sein kann.

Bei einem zwei- oder mehrstufigen optischen System mit einem Zwischenbild ist die Blende zweckmäßigerweise in der Zwischenbildebene angeordnet. Bei Anordnung in der Zwischenbildebene kann eine Vignettierung des Bilds durch die Blende verschwindend klein und bei naher Anordnung am Detektor immer noch gering gehalten werden, sodass störende optische Effekte der Blende im Bild weitgehend vermieden werden oder in einem vertretbaren Maß gehalten werden können.

Eine weitere Ausführungsform der Erfindung sieht vor, dass das optische System einen bildseitig telezentrischen Strahlengang erzeugt, in dem die Blende angeordnet ist. Im telezentrischen Strahlengang bleibt die Abschattung der Blende unabhängig von ihrer Position im Gesichtsfeld zumindest im Wesentlichen gleich groß, sodass eine homogen große Abschattung auch an den Rändern des Gesichtsfelds erreicht werden kann, wenn der bestrahlte Bereich dort positioniert wird.

Weiter ist es vorteilhaft, wenn die Detektoreinrichtung zumindest zwei Detektoren umfasst, die in ihrer absoluten und/oder spektralen Empfindlichkeit unterschiedlich zueinander sind. Die beiden Detektoren sind zweckmäßigerweise zumindest im Wesentlichen in den gleichen Ausschnitt der Umgebung gerichtet. Der erste Detektor kann hierbei zur Darstellung des Bilds der Umgebung dienen und der zweite kann zur Ermittlung einer Eigenschaft des Blendobjekts vorbereitet sein.

Eine weitere vorteilhafte Ausführungsform der Erfindung sieht vor, dass die Blende in Richtung der optischen Achse verfahren wird. Hierdurch kann eine Vignettierung des Bilds durch die Blende gezielt eingesetzt und variiert werden. Dieses Erfindungsdetail kann alternativ oder zusätzlich zum Einstellen des Randabschattungsbereichs mittels Aufheizung verwendet werden.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- Fig.1: eine schematische Darstellung einer Vorrichtung zum Abbilden einer Umgebung mit einer Detektoreinrichtung, die zwei unterschiedliche Detektoren umfasst,
- Fig. 2: ein optisches System an einem der Detektoren der Detektoreinrichtung aus Fig. 1 und
- Fig. 3: einen bestrahlten Bereich einer Blende vor dem Detektor aus Fig. 2, der von einem Randabschattungsbereich umgeben ist.

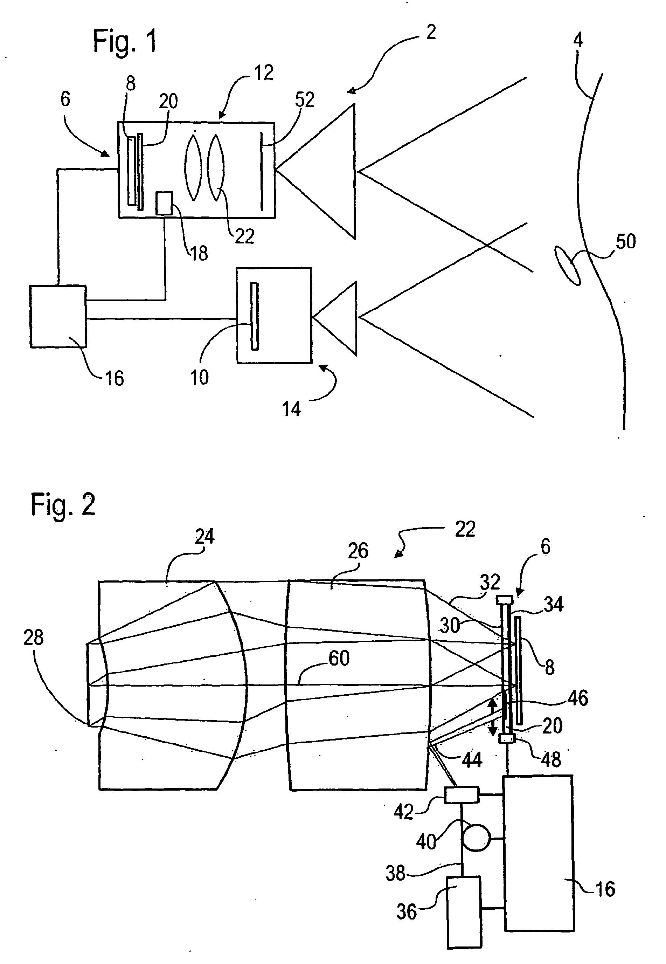

Fig. 1 zeigt eine Vorrichtung 2 zur Abbildung einer Umgebung 4 auf eine Detektoreinrichtung 6, die zwei Detektoren 8, 10, umfasst. Die Detektoren 8, 10 sind Bestandteil von zwei unterschiedlichen Kameras 12, 14, die beide ein Gesichtsfeld von 60° × 60° in die Umgebung 4 aufweisen, wobei beide Kameras 12, 14 den gleichen Ausschnitt der Umgebung 4 aufnehmen. Beide Kameras 12, 14 sind mit einem Steuermittel 16 verbunden, das als elektronische Datenverarbeitungseinheit ausgeführt ist, die über ein Computerprogramm verfügt, das zum Steuern eines Strahlers 18 zum Bestrahlen einer Blende 20 vor dem Detektor 8 und zum Auswählen eines Bildbereichs, der von der Blende 20 abgedeckt werden soll, ausgebildet ist.

Der Detektor 8 ist ein im infraroten Spektralbereich (Langwelleninfrarot zwischen 8 µm und 12 µm) empfindliches Mikrobolometer, das in einem Vakuumgefäß angeordnet ist. Der Detektor 10 ist ebenfalls ein Matrixdetektor, jedoch wesentlich unempfindlicher und über einen weiteren spektralen Bereich empfindlich als der Detektor 8. Während die Kamera 12 zum Abbilden und Überwachen der Umgebung 4 dient, ist die Kamera 14 dazu ausgeführt, Blendobjekte im Gesichtsfeld der Kamera 12 zu erkennen, wobei mit Hilfe des Steuermittels 16 die Position des Blendobjekts im Gesichtsfeld der Kamera 14 und damit im Gesichtsfeld der Kamera 12 bestimmt wird.

Fig. 2 zeigt ein optisches System 22 und den Teil der Detektoreinrichtung 6, der in der Kamera 12 angeordnet ist. Das optische System 22 umfasst ein Objektiv mit einer einstufigen Optik mit einem Gesichtsfeld von 60° x 60° und einer Brennweite von 18 mm. Die Blendenzahl beträgt 1. Es besteht aus zwei Linsen 24, 26 aus Germanium, und die Aperturblende 28 ist unmittelbar vor der ersten Linse 24 angeordnet. Das Objektiv hat einen bildseitig telezentrischen Strahlengang, d. h. die Strahlkegel der Bildpunkte auf dem Detektor 8 sind parallel.

Der Teil der Detektoreinrichtung 6, der sich in der Kamera 12 befindet, umfasst neben dem Detektor 8 ein Vakuumgefäß mit einem Detektorfenster vor dem Detektor 8, durch den der Strahlgang 32 des Objektivs hindurch tritt und auf den Detektor 8 trifft. Der Abstand der Blende 20 zum Detektorfenster beträgt 0,5 mm.

Die Blende 20 ist so im Strahlengang 32 angeordnet, dass sie den gesamten Strahlengang 32 durchkreuzt und somit alle durch die Aperturblende 28 einfallende Strahlung auf den Detektor 8 blockieren kann. Sie umfasst eine gut Wärme leitende Trägerschicht, die zum optischen System 22 hin mit einer thermochromen Schicht 30 aus Vanadiumdioxid und zum Detektor 8 hin mit einer Reflexionsschicht 34 beschichtet ist, die in Fig. 2 als dicke Linie angedeutet ist. Durch die Reflexionsschicht 34 wird der Teil eines die Blende 20 bereichsweise aufheizenden Strahls 44 reflektiert, der die Blende 20 durchtreten hat, so dass er erneut in die Blende 20 gelenkt wird.

Der Strahler 18 umfasst einen Laser 36, dessen Strahlungsausgang mit einem Lichtleiterkabel 38, z.B. aus Glasfaser, verbunden ist. Ein so genanntes Faser-Pigtail 40 dient zum optischen Pumpen und somit zu einem Verstärken der durch das Lichtleiterkabel 38 geleiteten Abschattungsstrahlung. Das Lichtleiterkabel 38 mündet in einer Strahl steuerung 42, in der der Strahl 44 mit Hilfe von zueinander beweglichen Mikrolinsen, die in Form eines Teleskops angeordnet sind, gerichtet und geformt wird. Die Strahlformung umfasst eine Einstellung der Divergenz des Strahls 44, die in Fig. 2 angedeutet ist, so dass die vom unbewegten Strahl 44 beleuchtete Fläche der Blende 20 in ihrer Größe einstellbar ist. Mit der Strahlsteuerung 42 wird der Strahl 44 auf einen zu bestrahlenden Bereich 46 der Blende 20 ausgerichtet, wobei der Bereich 46 größer sein kann als die bei maximaler Divergenz durch den Strahl beleuchtbare Fläche. In diesem Fall wird der Strahl 44 periodisch über den Bereich 46 gelenkt, wie durch die beiden Pfeile angedeutet ist, so dass er den Bereich abscannt und hierdurch gleichmäßig bestrahlt.

Das Steuermittel 16 ist verbunden mit dem Laser 36 zum Ein- und Ausschalten des Strahls 44, mit dem Faser-Pigtail 40 zum Einstellen der Strahlungsleistung des Strahls 44, mit der Strahlsteuerung 42 zum Formen und Lenken des Stahls 44 und mit einem Heizmittel 48 zum Vorheizen der Blende 20, das rahmenförmig um die Blende 20 herumgeführt ist.

Bei einem Bestrahlen der Blende 20 mit dem Laserstrahl 44 wird dieser auf die Linse 26 gelenkt. Die Wellenlänge des Strahls 44 liegt unter 1 µm, so dass die Linse 26 für die Strahlung des Strahls 44 opak ist und die Linse 26 den Strahl 44 auf die Blende 20 reflektiert. Der Strahl 44 trifft auf die thermochrome Schicht 30 und erwärmt diese über die Übergangstemperatur des Phasenübergangs, so dass sie im bestrahlten Bereich 46 ihre Lichtdurchlässigkeit im Bereich zwischen 8 µm und 12 µm vollständig verliert. Strahlung in diesem Wellenlängenbereich wird von der Schicht reflektiert und gelangt nicht zum Detektor 8. Während der Bestrahlung durch den Laser 36 wird der Teil der Laserstrahlung, der die Blende 20 durchtreten hat, von der Reflexionsschicht 34 der reflektiert, so dass er erneut in die Blende 20 gelenkt wird und diese aufheizt.

Die Vorrichtung 2 dient als Überwachungssystem zur Überwachung der Umgebung 4 und die Blende 20 dient zum Schutz vor zu hoher Bestrahlungsstärke des Detektors 8 durch Sonneneinstrahlung. In diesem Beispiel kann auf die Kamera 14 verzichtet werden. Das Steuermittel 16 berechnet die Lage der Sonne im Gesichtsfeld, wobei das Bestimmen der Lage der Sonne im Gesichtsfeld einem Auswählen dieses Bildbereichs gleich kommt. Das Steuermittel 16 steuert die Position des zu bestrahlenden Bereichs 46 im Gesichtsfeld nun so, dass die Sonne aus dem Bild der Umgebung 4 auf den Detektor 8 vollständig ausgeblendet ist.

Außerdem kann durch das Steuermittel 16 oder eine andere Bildverarbeitungseinheit ein potentielles Blendobjekt 50 erfasst werden, das zunächst nicht blendet. Ein Blendobjekt 50 kann ein Flugzeug oder ein anderer Flugkörper oder ein Fahrzeug oder dergleichen sein. Das Erkennen als potentielles Blendobjekt kann durch eine Eigenschaft des Blendobjekts 50 ermittelt werden, beispielsweise eine Form oder eine andere Eigenschaft des Aussehens, eine Abstrahlcharakteristik, beispielsweise derjenigen eines Triebwerks, und/oder einer Bewegungsdynamik. Es ist auch möglich, das potentielle Blendobjekt 50 durch Radar zu erkennen, das datentechnisch mit dem Steuermittel 16 verbunden ist. Aus der erkannten Lage des potentiellen Blendobjekts im Raum oder im Gesichtsfeld kann die Position des zu bestrahlenden Bereichs 46 der Blende 20 zum Ausblenden des Blendobjekts 50 entsprechend ausgewählt und die Bestrahlung der Blende 20 durch den Strahler 18 begonnen werden, so dass der Bildbereich um das Blendobjekt 50 abgeschattet wird.

Die Bestrahlung erfolgt zunächst so, dass der ausgewählte Bereich 46 der Blende 20 vollkommen opak und damit lichtundurchlässig im Empfindlichkeitsbereich des Detektors 8 wird. Dann wird die Einstrahlung so weit reduziert, bis die Temperatur der Blende 20 im Bereich 46 auf die Übergangstemperatur absinkt, so dass das thermochrome Material wieder an Transparenz gewinnt. Das Blendobjekt 50 wird wieder anfänglich im Bild sichtbar und kann anhand von Bildverarbeitung erkannt und verfolgt werden. Die von außen eingestrahlte Leistung in den Bereich 46 wird nun anhand einer Eigenschaft des Blendobjekts 50 im Bild geregelt. Eine Steuerung oder Regelung anhand einer Eigenschaft des Blendobjekts 50 ist generell vorteilhaft. Zweckmäßigerweise wird die Leistung so eingestellt, dass das Blendobjekt 50 erkennbar bleibt, dessen Strahlung das Bild jedoch nicht stört. Auch andere Eigenschaften, wie eine Strahlungskontinuität des Blendobjekts 50 können für die Steuerung oder Regelung der eingestrahlten Leistung verwendet werden. Allgemein gesprochen erfolgt eine Steuerung oder Regelung der eingestrahlten Leistung aus Ergebnissen einer Bildauswertung des Bilds der Detektoreinrichtung 6.

Weiter ist ein Bildverarbeitungsprogramm innerhalb des Steuermittels 16 vorhanden, das eine Bestrahlungsstärke eines jeden Pixels des Matrixdetektors 8 und/oder des Matrixdetektors 10 der Kamera 14 auswertet. Übersteigt die Intensität in zumindest einem Pixel einen Grenzwert, so wird ein Ausblendverfahren mit Hilfe eines Programms oder eines Programmteils, das durch das Steuermittel 16 ausgeführt wird, gestartet. Liegt die Strahlungsintensität im geblendeten Pixel beispielsweise über dem ersten Grenzwert, jedoch unter einem zweiten Grenzwert, sodass die Strahlung zwar als Bildstörung jedoch nicht als Gefahr einer Schädigung des Detektors 8 klassifiziert wird, kann die Position des geblendeten Pixels mit Hilfe des Detektors 8 bestimmt und die Abschattung veranlasst werden. Tritt das Blendobjekt 50 aus dem abgeschatteten Bereich im Bild heraus, so werden Pixel am Rand der Abschattung geblendet, sodass deren Intensität über den Grenzwert steigt. Dies wird vom Steuermittel 16 registriert und die Position der Abschattung wird entsprechend der gemessenen Strahlungsintensitäten so geregelt, dass die Abschattung über die geblendeten Pixel bewegt wird. Die Regelgröße ist eine auf dem Detektor 8 oder Detektor 10 gemessene Strahlungsintensität.

Übersteigt eine gemessene Intensität einen zweiten Grenzwert, so wird ein Verschluss 52 in der ersten Kamera 12 verschlossen, sodass der Strahlengang 32 komplett unterbrochen ist oder keine Strahlung mehr auf die Aperturblende 28 auftrifft. Eine Überwachung der Umgebung mit Hilfe der Kamera 12 ist somit nicht mehr möglich. Anstelle dessen kann eine gröbere Überwachung der Umgebung 4 mit Hilfe der Kamera 14 treten, deren Aufgabe nun ist, die Lage des Blendobjekts im Gesichtsfeld bzw. im Bild festzustellen. Dies wird durch eine Intensitätsmessung der Strahlung auf die Pixel des Detektors 10 bzw. deren Signalstärke mit Hilfe des Steuermittels 16 durchgeführt. Sobald die Lage des Blendobjekts 50 im Gesichtsfeld bzw. im Bild ermittelt ist, werden der betroffene Bildbereich und eine vorgegebene Umgebung von ihm abgeschattet. Dann wird der Verschluss 52 wieder geöffnet und die Umgebungsüberwachung fortgeführt, wobei das Blendobjekt 50 durch die Abschattung im Bild ausgeblendet ist. Die Position der Abschattung im Bild wird fortwährend nachgeregelt mit Hilfe der am Detektor 10 gemessenen Strahlungsintensitäten, aus denen die Position des Blendobjekts 50 im Bild fortwährend überwacht wird. Selbstverständlich ist es auch möglich, die Position eines Blendobjekts 50, dessen Strahlungsintensität nur zwischen den beiden Grenzwerten liegt, mit Hilfe des Detektors 8 zu verfolgen. Ebenfalls möglich ist, auf die Kamera 14 zu verzichten und die Intensitätsauswertung bzw. Positionsmessung des Blendobjekts nur mit Hilfe des Detektors 8 auszuführen.

Die Größe und Form des bestrahlten Bereichs 46 und damit der Abschattung auf dem Detektor 8 kann beliebig gewählt werden und auch das gesamte Bild ergreifen. Je größer die Abschattung ist, desto mehr Leistung wird in die Blende 20 gebracht. Diese Leistung kann aus dem Strahl 44 alleine kommen. Bei großen Bereichen 46 ist es sinnvoll, einen Teil der Leistung durch das Heizmittel 48 einzutragen, durch die die Blende 20 vorgeheizt wird. Die Temperatur der Blende 20 wird durch einen Sensor erfasst, der mit dem Steuermittel 16 verbunden ist und der die gesamte Fläche der Blende 20 abtastet. Je größer der zu bestrahlende Bereich ist, desto größer kann die Vorheizleistung sein oder desto näher kann die Temperatur der Blende 20 vor oder während der Bestrahlung an die Übergangstemperatur der thermochromen Schicht gebracht werden, so dass die Bestrahlung weniger Leistung pro Fläche eintragen muss.

Eine Größe des zu bestrahlenden Bereichs 46 und damit einer Abschattung im Bild kann an die Größe eines erkannten Blendobjekts 50 angepasst werden. Hierbei kann darauf geachtet werden, dass die Größe so gewählt ist, dass stets ein verbleibender und festgelegter Abstand zwischen dem Rand des Blendobjekts 50 und dem Rand der Abschattung verbleibt. Dieser Abstand kann von mehreren Faktoren beeinflusst werden. Ein Faktor kann eine Strahlungsintensität des Blendobjekts 50 pro Fläche auf dem Detektor 8 sein. Auch eine Bewegungsdynamik des Blendobjekts 50 im Bild kann als Steuergröße oder Regelgröße zur Einstellung der Größe der Abschattung verwendet werden. Hat das Blendobjekt 50 eine geringe Bewegungsdynamik, bewegt es sich also mit langsamer Geschwindigkeit im Bild, ist es ausreichend, die Abschattung klein zu lassen, da die Gefahr eines unvermittelten Austritts des Blendobjekts 50 aus der Abschattung im Bild gering ist. Bei einer hohen Bewegungsdynamik ist es sinnvoll, die Abschattung groß einzustellen, sodass das Blendobjekt 50 auch bei schnellen und unerwarteten Bewegungen abgeschattet bleibt. Allgemein gesprochen wird die Größe des Bereichs 46 und damit der Abschattung in Abhängigkeit von einer Eigenschaft, insbesondere der Bewegungsdynamik des Blendobjekts 50 im Bild eingestellt.

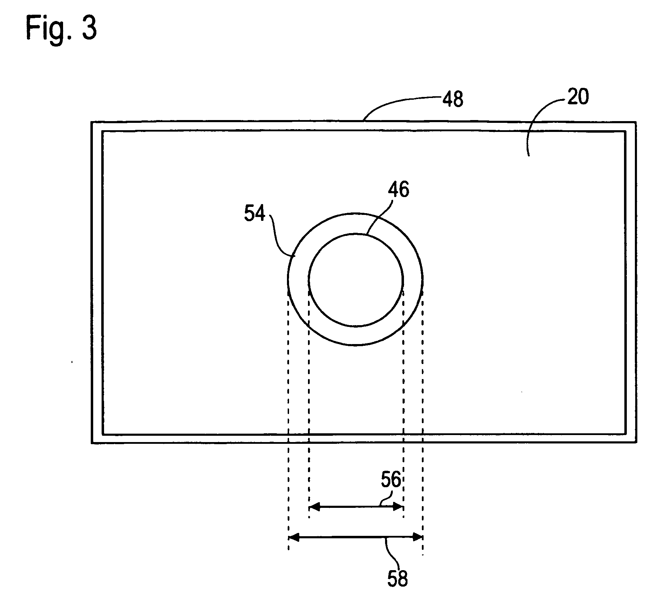

Fig. 3 zeigt einen Randabschattungsbereich 54, der um den bestrahlten Bereich 46 nutzbar gemacht wird. Die Größe des Randabschattungsbereichs 54 kann mit der Vorheiztemperatur der Blende 20 und alternativ oder zusätzlich mit der Heizleistung des Strahls 44 pro Fläche eingestellt werden. Je höher die Vorheiztemperatur der Blende 20 und/oder die Heizleistung des Strahls 44 pro Fläche ist, desto größer ist der Randabschattungsbereich 54 bezogen auf die Breite des Randabschattungsbereichs 54, die sich in Fig. 3 aus dem bestrahlten Bereich 46, der einen Kernschatten mit einem ersten Durchmesser 56 bildet, und dem Randabschattungsbereich 54, der einen Teilschatten mit einem größeren Durchmesser 58 bildet, ergibt. Die Hälfte der Differenz der beiden Durchmesser 56 und 58 und damit die Breite bzw. Größe des Randabschattungsbereichs 54 kann so eingestellt werden.

Ein ähnlicher Effekt kann durch eine Vignettierung des Bilds durch die Abschattung erreicht werden, wenn diese nicht in einer Bildebene des optischen Systems 22 liegt. Je weiter die Blende 20 von der Bildebene entfernt ist, desto größer ist die Vignettierung. Die Vignettierung kann eingestellt werden, indem die Blende 20 in Richtung der optischen Achse 60 im Strahlengang 32 verfahren wird. Je weiter die Blende 20 von der Bildebene entfernt wird, desto größer ist die Vignettierung und das Verhältnis vom großen Durchmesser 58 zu kleinem Durchmesser 56 auch ohne einen Randabschattungsbereich 54. Die Bewegung der Blende 20 parallel zur optischen Achse 60 wird ebenfalls durch das Steuermittel 16 gesteuert, wobei auch eine Regelung denkbar ist.

Eine Einstellung der Vignettierung und/oder des Randabschattungsbereichs 54 erfolgt durch das Steuermittel 16 in Abhängigkeit von einer Eigenschaft des Blendobjekts 50. Die Eigenschaft kann eine Bewegungsdynamik des Blendobjekts 50, eine Geschwindigkeit des Blendobjekts 50 im Bild, eine Größe und/ oder eine Strahlungsintensität des Blendobjekts 50 sein.

### Bezugszeichenliste

- 2: Vorrichtung
- 4: Umgebung
- 6: Detektoreinrichtung
- 8: Detektor
- 10: Detektor
- 12: Kamera
- 14: Kamera
- 16: Steuermittel
- 18: Strahlers
- 20: Blende
- 22: optisches System
- 24: Linse
- 26: Linse
- 28: Aperturblende
- 30: Schicht
- 32: Strahlengang
- 34: Reflexionsschicht
- 36: Laser
- 38: Lichtleiterkabel
- 40: Faser-Pigtail
- 42: Strahlsteuerung
- 44: Strahl
- 46: Bereich
- 48: Heizmittel
- 50: Blendobjekt
- 52: Verschluss
- 54: Randabschattungsbereich
- 56: Durchmesser
- 58: Durchmesser
- 60: optische Achse

## Patentansprüche

1. Verfahren zum Abbilden einer Umgebung (4) auf einen Detektor (8) einer Detektoreinrichtung (6), bei dem mit einem optischen System (22) ein Abbildungsstrahlengang (32) erzeugt wird und mit einer im Abbildungsstrahlengang (32) angeordneten Blende (20) ein Teilbereich des Bilds der Umgebung (4) auf dem Detektor (8) abgeschattet wird, wobei
a) die Blende (20) in einem Teilbereich (46) bestrahlt wird und die Transmission der Blende (20) im Teilbereich (46) im gesamten Frequenzbereich, in dem der Detektor (8) empfindlich ist, durch die Bestrahlung herabgesetzt wird und der bestrahlte Teilbereich (46) der Blende (20) den ausgewählten Teilbereich des Bilds abschattet und
b) die Bestrahlung durch einen gerichteten Strahl (44) eines Strahlers (18) erfolgt, wobei der Strahl (44) seitlich in den Abbildungsstrahlengang (32) eingeführt wird und der Strahl (44) an einem Element des optischen Systems (22) reflektiert wird, bevor er die Blende (20) trifft.

2. Verfahren nach Anspruch 1,
wobei die Blende (20) thermochromes Material enthält.

3. Verfahren nach Anspruch 1 oder 2,
wobei die Form des bestrahlten Teilbereichs (46) durch eine Veränderung der Ausrichtung des Strahls (44) auf die Blende (20) erfolgt.

4. Verfahren nach einem der vorhergehenden Ansprüche,
wobei die Blende (20) von einem die Blende (20) kontaktierenden Heizmittel (48) von ihrem Randbereich her aufgeheizt wird bevor sie von außen bereichsweise bestrahlt wird.

5. Verfahren nach einem der vorhergehenden Ansprüche,
wobei vor der Bestrahlung mittels einer Vorheizung der Blende (20) ein Randabschattungsbereich (54) über den bestrahlten Teilbereich (46) der Blende (20) hinaus in Abhängigkeit einer Eigenschaft eines Blendobjekts (50) im Bild eingestellt wird.

6. Verfahren nach einem der vorhergehenden Ansprüche,
wobei ein Blendobjekt (50) in einem Bild der Umgebung (4) erkannt und die Bestrahlung der Blende (20) anhand einer Eigenschaft der Blendung durch das Blendobjekt (50) geregelt wird.

7. Verfahren nach einem der vorhergehenden Ansprüche,
wobei die Detektoreinrichtung (6) einen ersten und einen zweiten Detektor (8, 10) umfasst, der Strahlengang (32) zum ersten Detektor (8) vollständig unterbrochen wird, der abzuschattende Bildbereich mit Hilfe des zweiten Detektors (10) ausgewählt wird, die Blende (20) im Teilereich (46) bestrahlt wird und der Strahlengang (32) zum ersten Detektor (8) wieder geöffnet wird.

8. Vorrichtung zum Abbilden einer Umgebung (4) auf einen Detektor (8) einer Detektoreinrichtung (6) mit
a) einem optischen System (22) zum Erzeugen eines Abbildungsstrahlengangs (32),
b) einer im Abbildungsstrahlengang (32) angeordneten Blende (20) zum Abschatten eines Teilbereichs des Bilds der Umgebung (4) auf dem Detektor (8),
c) einem Strahler (18) zum gerichteten Bestrahlen der Blende (20), wobei dessen Strahl (44) seitlich in den Abbildungsstrahlengang (32) einführbar ist und an einem Element des optischen Systems (22) reflektiert wird, bevor er die Blende (20) trifft, und
d) einem Steuermittel (16), das dazu vorbereitet ist, den Strahler (18) so zu steuern, dass die Blende (20) in einem Teilbereich (46) bestrahlt wird, wobei die Transmission der Blende (20) im Teilbereich (46) im gesamten Frequenzbereich, in dem der Detektor (8) empfindlich ist, durch die Bestrahlung im Vergleich zum unbestrahlten Bereich herabgesetzt wird.

9. Vorrichtung nach Anspruch 8,
wobei die Blende (20) parallel zur optischen Achse (60) des optischen Systems (22) verfahrbar ist.

## Claims

1. Method for imaging a surrounding area (4) on a detector (8) of a detector device (6) in which an optical system (22) produces an imaging beam path (32), and a panel (20), which is arranged in the imaging beam path (32), shadows a subarea of the image of the surrounding area (4) on the detector (8), wherein
a) the panel (20) is illuminated in a subarea (46), and the transmission of the panel (20) in the subarea (46) is reduced by the illumination in the entire frequency range in which the detector (8) is sensitive, and the illuminated subarea (46) of the panel (20) shadows the selected subarea of the image, and
b) the illumination is provided by a directional beam (44) of an emitter (18), wherein the beam (44) is introduced at the side of the imaging beam path (32) and the beam (44) is reflected on an element of the optical system (22) before it strikes the panel (20).

2. Method according to Claim 1, wherein the panel (20) contains thermochromic material.

3. Method according to Claim 1 or 2, wherein the shape of the illuminated subarea (46) is governed by a change in the alignment of the beam (44) on the panel (20).

4. Method according to one of the preceding claims, wherein the panel (20) is heated by a heating means (48), which makes contact with the panel (20), from its edge area before it is illuminated in places from the outside.

5. Method according to one of the preceding claims, wherein, before the illumination, an edge shadow area (54) is set, beyond the illuminated subarea (46) of the panel (20), by preheating the panel (20) as a function of a characteristic of a dazzling object (50) in the image.

6. Method according to one of the preceding claims, wherein a dazzling object (50) is identified in an image of the surrounding area (4), and the illumination of the panel (20) is regulated as a function of a characteristic of the dazzling from the dazzling object (50).

7. Method according to one of the preceding claims, wherein the detector device (6) has a first and a second detector (8, 10), the beam path (32) to the first detector (8) is completely interrupted, the image area to be shadowed is selected with the aid of the second detector (10), the panel (20) is illuminated in the subarea (46), and the beam path (32) to the first detector (8) is opened again.

8. Apparatus for imaging a surrounding area (4) on a detector (8) of a detector device (6) having
a) an optical system (22) for production of an imaging beam path (32),
b) a panel (20), which is arranged in the imaging beam path (32), for shadowing a subarea of the image of the surrounding area (4) on the detector (8).
c) an emitter (18) for directional illumination of the panel (20), wherein its beam (44) can be introduced at the side of the imaging beam path (32), and is reflected on an element of the optical system (22) before it strikes the panel (20), and
d) a control means (16) which is designed to control the emitter (18) such that the panel (20) is illuminated in a subarea (46), wherein the transmission of the panel (20) in the subarea (46) is reduced by the illumination, in comparison to the unilluminated area, in the entire frequency range in which the detector (8) is sensitive.

9. Apparatus according to Claim 8, wherein the panel (20) can be moved parallel to the optical axis (60) of the optical system (22).

## Revendications

1. Procédé de représentation d'un environnement (4) sur un détecteur (8) d'un dispositif de détecteurs (6), dans lequel on génère un chemin de faisceau de représentation (32) au moyen d'un système optique (22) et on occulte une partie du champ de l'image de l'environnement (4) sur le détecteur (8) au moyen d'un obturateur (20) disposé dans le chemin de faisceau de représentation (32), dans lequel
a) l'obturateur (20) est irradié dans une partie du champ (46) et la transmission de l'obturateur (20) dans la partie du champ (46) sur l'ensemble du champ fréquentiel sur lequel le détecteur (8) est sensible, est réduite par l'irradiation et la partie irradiée du champ (46) de l'obturateur (20) occulte la partie choisie du champ de l'image et
b) l'irradiation est réalisée au moyen d'un faisceau dirigé (44) d'une source de faisceau (18) dans laquelle le faisceau (44) est introduit latéralement dans le chemin de faisceau de représentation (32) et le faisceau (44) est réfléchi sur un élément du système optique (22) avant de frapper l'obturateur (20).

2. Procédé selon la revendication 1, dans lequel l'obturateur (20) contient du matériau thermochromique.

3. Procédé selon la revendication 1 ou 2, dans lequel la forme de la partie irradiée du champ (46) est réalisée par une modification de l'orientation du faisceau (44) sur l'obturateur (20).

4. Procédé selon une des revendications précédentes, dans lequel l'obturateur (20) est chauffé à partir de sa partie périphérique par un moyen de chauffage (48) au contact de l'obturateur (20) avant de l'irradier par parties à partir de l'extérieur.

5. Procédé selon une des revendications précédentes, dans lequel avant l'irradiation, au moyen d'un préchauffage de l'obturateur (20), on ajuste dans l'image un champ périphérique d'occultation (54) qui s'étend au delà de la partie irradiée du champ (46) de l'obturateur (20) en fonction d'une propriété d'un objet éblouissant (50).

6. Procédé selon une des revendications précédentes, dans lequel on reconnaît un objet éblouissant (50) dans une image de l'environnement (4) et on ajuste l'irradiation de l'obturateur (20) en se fondant sur une propriété dé l'éblouissement par l'objet éblouissant (50).

7. Procédé selon une des revendications précédentes, dans lequel le dispositif de détecteurs (6) comprend un premier et un deuxième détecteur (8, 10), le chemin de faisceau (32) vers le premier détecteur (8) étant complètement interrompu, le champ de l'image à occulter étant choisi à l'aide du deuxième détecteur (10), l'obturateur (20) étant irradié dans la partie du champ (46) et le chemin de faisceau (32) vers le premier détecteur (8) étant à nouveau ouvert.

8. Dispositif de représentation d'un environnement (4) sur un détecteur (8) d'un dispositif de détecteurs (6) avec
a) un système optique (22) pour la génération d'un chemin de faisceau de représentation (32),
b) un obturateur (20) disposé dans le chemin de faisceau de représentation (32) pour occulter une partie du champ de l'image de l'environnement (4) sur le détecteur (8),
c) une source de faisceau (18) pour l'irradiation ciblée de l'obturateur (20), dont son faisceau (44) peut être introduit latéralement dans le chemin de faisceau de représentation (32) et qui se réfléchit sur un élément du système optique (22) avant de frapper l'obturateur (20), et
d) un système de commande (16) préparé pour commander la source de faisceau (18) de telle sorte que l'obturateur (20) est irradié dans une partie du champ (46), la transmission de l'obturateur (20) dans la partie du champ (46) sur l'ensemble du champ fréquentiel sur lequel le détecteur (8) est sensible, est réduite par l'irradiation en comparaison avec le champ non irradié.

9. Dispositif selon la revendication 8, dans lequel l'obturateur (20) peut être déplacé parallèlement à l'axe optique (60) du système optique (22).
